# EUROPEAN PATENT SPECIFICATION

(11) **EP 2 780 587 B1**
(45) Date of publication and mention of the grant of the patent: **14.08.2019**
(21) Application number: 12848777.4
(22) Date of filing: 26.09.2012
(51) Int. Cl.: B63B 35/44, B63B 21/44, B63B 21/50, F03D 13/25

(54) **ANCHORING ARRANGEMENT AND A METHOD FOR ANCHORING AND DE-ANCHORING A FLOATABLE UNIT IN WATER**
VERANKERUNGSANORDNUNG UND VERFAHREN ZUR VERANKERUNG UND ENTANKERUNG EINER SCHWIMMFÄHIGEN EINHEIT IN WASSER
AGENCEMENT D'ANCRAGE PERMETTANT D'ANCRER UNE UNITÉ POUVANT FLOTTER DANS L'EAU, MÉTHODE D'ANCRAGE ET DE DÉSENCRAGE D'UNE UNITÉ POUVANT FLOTTER DANS L'EAU ET UTILISATION D'UN AGENCEMENT D'ANCRAGE

(30) Priority: 15.11.2011 SE 1151086
(43) Date of publication of application: 24.09.2014
(73) Proprietor: Flowocean AB, 721 30 Västerås (SE)
(72) Inventor: MORITZ, Bertil, 723 48 Västerås (SE)
(86) International application number: PCT/SE2012/051016
(87) International publication number: WO 2013/074016

(56) References cited:
- WO-A1-02/095223
- WO-A1-2005/061887
- WO-A2-2010/129579
- WO-A2-2010/129579
- DE-A1- 19 744 174
- DE-A1-102009 040 648
- GB-A- 2 311 566
- NL-A- 8 601 203
- US-A- 4 130 077

## Description

### FIELD OF THE INVENTION

The present invention relates to an anchoring arrangement for anchoring a floatable unit in water. The anchoring arrangement comprises a floatable wind power unit, and an anchoring element comprising an elongated fundament firmly attached in a bottom sediment so that a longitudinal axis of the fundament is oriented from the bottom sediment towards the surface of the water.

The present invention further relates to a method for anchoring a floatable unit in water by means of an anchoring arrangement and use of anchoring arrangement.

### PRIOR ART

Prior art anchoring arrangements for anchoring a floatable unit in water comprising wires, chains, ropes to a fundament, such as an anchor, attached in the bottom sediment. The wires are either attached directly to the floatable unit or to a buoy. The buoy enables the floatable unit to pivot around the fundament or the buoy.

A problem with prior art anchoring arrangements is that the floatable unit, in particular when anchored in shallow water, may entangle in the wires connected to the fundament or the buoy. This may result in that the floatable unit is prevented from pivoting around the fundament or the buoy, which may prevent the use of the floatable unit. For example, when the floatable unit comprises a wind power unit, the production of electric energy may be reduced or terminated due to that floatable unit is prevented from pivoting around the fundament or the buoy. Furthermore, the entanglement of the wires may result in damage to the connection or attachment arrangement between the fundament/buoy and the floatable unit.

A further problem with prior art anchoring arrangements is relative movement of the cables to the buoy. In shallow waters the movements of a buoy, both vertically and horizontal offset, could be of the same magnitude as the water depth. This would require special arrangement to offload the cable from severe strain and stress.

A further problem with prior art anchoring arrangements is that the fundament, such as the anchor or anchors, is subjected to bending forces directed along the longitudinal axis of the fundament, wherein the fundament has to be designed to withstand such vertical forces. Alternative catenary anchoring system is used which require long wires to avoid vertical forces. For non floating wind power units arranged in water, fundaments are used to maintain its position. They are either lattices towers or monopoles. These fundaments are subjected to substantial bending forces, since the horizontal forces from wind and water are quite at a distance from the bottom sediment.

SE532886 C2 discloses a floatable unit comprising a wind power unit. The floatable unit is anchored in the bottom sediment according to above described prior art arrangements.

Moreover, document DE 10 2009 040648 A1 discloses an anchoring arrangement for anchoring a floatable wind power unit comprising the features of the preamble of claim 1.

### OBJECTS AND SUMMARY OF THE INVENTION

The object of the present invention is to provide an improved anchoring arrangement that in particular solves the previously mentioned problems of prior art.

A first object of the invention is to provide an anchoring arrangement that reduces the risk of entanglement between the floatable unit and the fundament. A second object of the invention is to provide an anchoring arrangement that requires a less rigid attachment of the fundament in the bottom sediment for anchoring the floatable unit in comparison to prior art. The above objects are also obtained by means of a method for anchoring a floatable unit and use of an anchoring arrangement.

These objects are obtained by an anchoring arrangement anchoring a floatable unit in water as defined by claim 1. The anchoring arrangement is characterized in that the anchoring element further comprises a displacement member rotary arranged on the fundament and a connection member adapted to form a connection between the displacement member and a first part of the floatable unit.

The connection member forms a rigid connection between the displacement member and the first part of the floatable unit. Preferably, the connection member is configured substantial inflexible and unbendable to the forces it is being subjected to. The displacement member enables the floatable unit to rotate around the fundament without risk of entanglement in that the connection is arranged in vicinity of the displacement member without the uses of wires or similar.

According to the invention, the displacement member is arranged displaceable along said longitudinal axis between a first position and a second position, which first position is located further away from the bottom sediment than the second position, wherein the connection member is adapted to form a rigid connection between the displacement member and a first part of the floatable unit when the displacement member is in the first position and the displacement member is adapted, while being connected to the first part of the floatable unit, to be brought from the first position to the second position.

The anchoring element enables the first part of the floatable unit to be connected to the displacement member in the first position by means of the connection member that forms the rigid connection between the displacement member and the first part of the floatable unit. The first position of the displacement member is located so to allow the floatable unit to float at the surface of the water when the first part of the floatable unit is connected to the displacement member.

After that the connection has been formed between the displacement member and the first part of the floatable unit, the displacement member is adapted to be displaced from the first position to the second position while the floatable unit is maintained connected to the displacement member. Accordingly, the first part of the floatable unit is sunk together with the displacement member from the first position to the second position. The second position of the displacement member provides an anchored state for the floatable unit.

The first part of the floatable unit is anchored to the fundament at a level of the second position of the displacement member that is located closer to the bottom sediment than the first position of the displacement member. Accordingly, bending forces on the fundament will be reduced in comparison to prior art Thereby, the fundament will mainly be subjected to shear forced directed away from the longitudinal axis. This allows the requirements on the attachment of the fundament in the bottom sediment to be reduced in comparison to prior art attachment of anchoring elements for anchoring of the corresponding size floatable units. Accordingly, the cost of the providing the anchoring of the floatable unit is reduced in comparison to prior art anchoring.

According to one aspect of the invention, the first position is located at or in vicinity of the surface of the water. This enables the connection between the first part of the floatable unit and the displacement member to be established while the floatable unit is floating at the surface of the water.

According to another aspect of the invention, the second position is located at or in vicinity of the bottom sediment. Thereby, the possible bending forces on the fundament is minimized, wherein the requirements on the attachment of the fundament is minimized.

According to a further aspect of the invention, the displacement member is adapted to be displaced from the first position to the second position by means of reducing the buoyancy of the first part of the floatable unit while a second part of the floatable unit is maintained floating. Accordingly, only the first part of the floatable unit is sunk to the second position of the displacement member. The remaining part of the floatable unit is maintained floating.

According to one embodiment of the invention, the anchoring element further comprises a locking member adapted to form a fastening of the displacement member to the second position while the first part of the floatable unit is connected to the displacement member.

When the displacement member is located in the second position with the first part of the floatable unit connected to the displacement member, the displacement member is fastened in the second position by means of the locking member. Accordingly, the first part of the floatable unit is fastened together with the displacement member at the second position of the displacement member. Thereby, the displacement member and the floatable unit is prevented from being displaced in the vertical direction away from the bottom sediment.

According to one embodiment of the invention, the anchoring element comprises a stop member adapted to define the second position of the displacement member.

According to one embodiment of the invention, the connection member provides a releasable connection between the displacement member and the first part of the floatable unit when the displacement member is in the first position. According to one embodiment of the invention, the locking member provides a releasable fastening of the displacement member to the second position.

The displacement member is adapted, while being connected to the first part of the floatable unit, to be unfastened from the second position and be brought from the second position to the first position and in the first position be disconnected from the first part of the floatable unit.

The connection member and the locking member are configured to enable a releasable connection of the first part of the floatable unit to the displacement member respectively a releasable fastening of the displacement member to the second position. Accordingly, the floatable unit is adapted to be released from the anchoring element by means of reversing the process of anchoring the floatable unit. Thereby, the anchoring element enables the floatable unit to be released from the anchoring at the anchoring element. Such release of the floatable unit is necessary, for example, to allow the floatable unit to be towed to service facilities for maintenance of the floatable unit.

According to one embodiment of the invention, the fundament comprises an outer envelope surface and the displacement member comprises a body arranged around the outer envelope surface, which body comprises an inner envelope surface directed towards the outer envelope surface, wherein the outer envelope surface is adapted to guide the displacement of the displacement member between the first and the second position by contacting the inner envelope surface.

The outer envelope surface is extending along the longitudinal axis and is directed away from a center of the fundament. Preferably, the inner envelope surface and outer envelope surface are cylindrical surfaces. The fundament acts as a guide member that guides the displacement between the first and the second position of the displacement member. Of particular importance is that the displacement is guided to the second position so to enable the locking member to form the fastening of the displacement member to the second position. According to a preferably embodiment of the invention, the body of the displacement member is ring-formed.

According to one embodiment of the invention, the anchoring element comprises a first pivot that enables the displacement member to be pivoted in relation to the fundament and which first pivot comprises a first rotation axis that is arranged parallel with the longitudinal axis of the fundament.

The first pivot enables the floatable unit to pivot around the fundament. This enables the floatable unit to be pivoted during use, such as by wind and waves. Thereby, the strain on the connection between the first part of the floatable unit and the displacement member is reduced in comparison without the pivoting movement around the fundament.

According to one embodiment of the invention, the first pivot comprises the outer envelope surface and the inner envelope surface that are arranged so to enable the displacement member to rotate in relation to the fundament. The embodiment provides a simple and cost effective first pivot, wherein the outer envelope surface and the inner envelope surface cooperates in guiding the displacement member between the first and the second position, and to pivot the floatable unit around the fundament.

According to one embodiment of the invention, at least one of the displacement member and the connection member comprises a second pivot that enables the floatable unit to rotate in relation to the displacement member and which second pivot comprises a second rotation axis that is arranged perpendicular to the longitudinal axis of the fundament.

The second pivot enables the first part of the floatable unit to, while being connected to the displacement member, to pivot around the second rotation axis. Thereby, the second pivot enables the first part of the floatable unit to move up and down when subjected to underwater waves and streams.

According to one embodiment of the invention, at least one of the displacement member and the connection member comprises a third pivot that enables the floatable unit to be pivoted in relation to the displacement member and which third pivot comprises a third rotation axis that is arranged perpendicular to the first rotation axis and the second rotation axis.

The third pivot enables the first part of the floatable unit, while being connected to the displacement member, to pivot around the third rotation axis. Thereby, the third pivot enables the floatable unit to rotate in relation to the surface of the water when subjected to underwater waves and streams.

According to one embodiment of the invention, the fundament has a length that allows the fundament to, when attached in the bottom sediment, extend from the bottom sediment to at least the surface of the water. Preferably, the anchoring element is arranged so that the fundament extends from the bottom sediment to above the surface of the water. Thereby, the first part of the floatable unit is easily connected to the displacement member while the floatable unit is floating at the surface of the water.

According to one embodiment of the invention, the floatable unit comprises a first pontoon member at a first part of the floatable unit, which first pontoon member comprises a first state in which the pontoon member provides a first buoyancy that enables the first part of the floatable unit to float and a second state in which the pontoon member provides a second buoyancy that sinks the first part of the floatable unit towards the bottom sediment, wherein the displacement member is adapted to be displace, while a second part of the floatable unit is floating, from the first position to the second position by means of changing the first pontoon member from the first state to the second state and from the second position to the first position by means of changing the first pontoon member from the second state to the first state.

The displacement member is adapted to be displaced from the first position to the second position by means of changing the first pontoon member from the first state to the second state. Thereby, the first part of the floatable unit sinks towards the bottom sediment while the second part of the floatable unit is maintained floating.

The first part of the floatable unit is sunk to the second position of the displacement member, wherein the floatable unit is arranged between the first part at the second position of the displacement member and the second part of the floatable unit that is floating above the second position, preferably above the surface of the water. Thereby, the fundament will mainly be subjected to bending forced. This allows the requirements on the attachment of fundament in the bottom sediment to be reduced in comparison to prior art attachment of anchoring elements for anchoring of the corresponding size of floatable unit.

According to one embodiment of the invention, the displacement member is adapted to be adjusted to any position between the first and the second position by means of regulating the buoyancy of the first pontoon member.

According to one embodiment of the invention, the distance between the first and the second part is longer than the distance between the first and the second position of the displacement member.

According to one embodiment of the invention, the distance between the first and the second part is longer than the depth between the bottom sediment and the surface of the water.

The anchoring arrangement is in particular suitable for anchoring in shallow water. The term "shallow water" refers to that the length between the first and the second part is longer than the depth between the bottom sediment and the surface of the water. Thereby, the anchoring arrangement enables the first part of the floatable unit to be held at the displacement member located close to the bottom sediment, which results in a substantial reduction of the bending forces subjected to the fundament.

According to one embodiment of the invention, the first pontoon member comprises wall sections that form a space, wherein the first pontoon member is adapted to be changed between the first state and the second state by means of introducing and removing water to/from said space. By means of allowing water to be introduced into the space and regulating the amount of water in the space, the buoyancy of the first pontoon member is adjustable between the first and the second state.

According to one embodiment of the invention, the arrangement comprises means for introducing and removing water from the space of the first pontoon member. The means for introducing and removing water comprises for example a pump, a valve, for controlling the level of water in the space. Thereby, the relation between air and water in the space is regulated in order to change the first pontoon member between the first and the second state.

According to one embodiment of the invention, the floatable unit comprises a frame work providing a buoyancy and a second pontoon member at a second part of the floatable unit, wherein the second pontoon member comprises a third state in which the second pontoon member has a first mass and a fourth state in which the second pontoon member has a second mass, which second mass is larger than the first mass, wherein the second pontoon member is adjustable between the third state and the fourth state.

The buoyancy of the frame work assures that the second part of the floatable unit floats at the surface of the water when the first part of the floatable unit has been sunk to the second position of the displacement member.

The second pontoon member is adapted to be arranged in the third state when the floatable unit is transported to and from its anchoring position, wherein the second pontoon member provides additional stability to the floatable unit. The second pontoon member is adapted to be arranged in the fourth state when the first part of the floatable unit is arranged at the second position of the displacement member. By means the larger mass of the second pontoon member in the fourth state in comparison to the third state, the movement of the floatable unit in the water will be reduced in that the natural frequency of the floatable unit is reduced. The addition of mass at a distance from the connection between the displacement member and the first part of the floatable unit results in a larger reduction of the natural frequency of the floatable unit in comparison to if a corresponding mass was added to the first pontoon member.

According to one embodiment of the invention, the second pontoon member is adapted to be located above the surface of the water when the first part of the floatable unit is at the second position of the displacement member. Accordingly, in the anchored position the second pontoon member does not contribute to the buoyancy of the floatable unit but stabilize the floatable unit.

According to one embodiment of the invention, the second pontoon member comprises the corresponding features of the first pontoon member. Accordingly, the second pontoon member is regulated between the third and the fourth state by means of introducing and removing water to/from the space of the second pontoon member. According to one embodiment of the invention, the means for introducing and removing water is configured to regulate the level of water in the second pontoon member.

According to one embodiment of the invention, the fundament comprises a hollow space extending along the longitudinal axis and the anchoring arrangement comprises a power cable extending from the bottom sediment through said hollow space and to above the surface of the water.

The power cable is positioned on the bottom of the sea and extends through the hollow space of the fundament. The power cable is for example used for connecting a wind power plant to the grid. The connection of the power cable is established above the surface of the water after the connection of the floatable unit to the fundament. An advantage with this is that the power cable does not move in the water due to movements of the framework, as compared to the solution when the floating unit is anchored to a buoy.

According to one embodiment of the invention, the first pontoon member comprises an opening in the wall sections for introduction/removal of water to/from the space and a valve for controlling said introduction and removal of water. Preferably, water is introduced by opening the valve and water is removed through the opening.

According to one embodiment of the invention, the first buoyancy enables the first part of the floatable unit to float so to enable a connection to the displacement member when the displacement member is in the first position and the second buoyancy enables the first part of the floatable unit to sink together with the displacement member to the second position of the displacement member.

According to one embodiment of the invention, the floatable unit comprises a wind power unit for generating electric energy. The wind power unit on the floatable unit is subjected to wind and therefore the improved anchoring arrangement provided by the anchoring arrangement is suitable for holding the wind power unit in place at its anchored position.

The previously mentioned object of the invention is further obtained by a method for anchoring a floatable unit in water according to claim 15. The method involves the use of an anchoring element comprising an elongated fundament firmly attached in a bottom sediment so that a longitudinal axis of the fundament is oriented from the bottom sediment towards the surface of the water and a displacement member displaceable along said longitudinal axis between a first position and a second position, which first position is located further away from the bottom sediment than the second position. The method comprises the steps:
- connecting a first part of the floatable unit to the displacement member,
- displacing the displacement member with the first part of the floatable unit from the first position to the second position.

By means of the method, the floatable unit is anchored so to reduce the bending moment on the fundament. Thereby, the fundament will mainly be subjected to shear forced directed away from the longitudinal axis. This allows the requirements on the attachment of fundament in the bottom sediment to be reduced in comparison to prior art attachment of anchoring elements for anchoring of the corresponding size of floatable unit.

According to one embodiment of the invention, the floatable unit comprises a first pontoon member at the first part of the floatable unit, which first pontoon member comprises a first state with a first buoyancy and a second state with a second buoyancy, which second buoyancy is lower than the first buoyancy, wherein the method comprises - displacing the displaceable member from the first position to the second position by means of changing the first pontoon member from the first state to the second state.

The displacement of the displacement member from the first position to the second position is realized by means of changing the first pontoon member form the first state to the second state. Thereby, the first part of the floatable unit acts on the displacement member and induces the displacement of the displacement member to the second position.

According to one embodiment of the invention, the first pontoon member is changed from the first state to the second state by means of at least partly introducing water into the first pontoon member.

According to one embodiment of the invention, the method further comprises:
- fastening the displacement member to the second position.

The previously mentioned object of the invention is further obtained by a method for de-anchoring a floatable unit in water according to claim 19. The method comprises the steps:
- displacing the displacement member with the first part of the floatable unit connected to the displacement member from the second position to the first position, and
- disconnecting the first part of the floatable unit from the displacement member.

By means of the method, the floatable unit is allowed to be released from the anchoring in a reversed manner to the establishment of anchoring the floatable unit. Thereby, the floatable unit is allowed to be released and towed to service facilities for maintenance.

According to one embodiment of the invention, the method comprises
- displacing the displaceable member from the second position to the first position by means of changing the first pontoon member from the second state to the first state.

The displacement of the displacement member from the first position to the second position is realized by means of changing the first pontoon member form the second state to the first state. Thereby, the first part of the floatable unit acts on the displacement member and induces the displacement of the displacement member to the first position.

According to one embodiment of the invention, the first pontoon member is changed from the second state to the first state by means of at least partly removing water from the first pontoon member.

According to one embodiment of the invention, the method comprises
- unfastening the displacement member from the second position.

According to one embodiment of the invention, the floatable unit comprises a second pontoon member at a second part of the floatable unit, wherein the second pontoon member comprises a third state in which the second pontoon member has a first mass and a fourth state in which the second pontoon member has a second mass, which second mass is larger than the first mass, wherein the further method comprises
- changing the second pontoon member from the third state to the fourth state when anchoring the floatable unit to the anchoring element.

According to one embodiment of the invention, the method comprises:
- changing the second pontoon member from the fourth state to the third state when removing the floatable unit from the anchoring element.

According to one embodiment of the invention, the second pontoon member is changed between the third and the fourth state by means of introducing/removing water from the second pontoon member.

The previously mentioned object of the invention is further obtained by use of an anchoring arrangement according to claim 1-13 for anchoring a floatable unit in water.

### BRIEF DESCRIPTION OF THE DRAWINGS

The invention will now be explained more closely by the description of different embodiments of the invention and with reference to the appended figures.
- Fig. 1: shows a perspective view of a floatable unit comprising a wind power plant.
- Fig. 2: shows a side view of an anchoring arrangement comprising the floatable unit connected to a displacement member of an anchoring element in a first position.
- Fig. 3: shows a side view of the anchoring arrangement in fig. 2 comprising the floatable unit connected to a displacement member of an anchoring element in a second position
- Fig. 4: shows a side view of an anchoring element attached in a bottom sediment.
- Fig. 5a: shows a flow chart of a method for anchoring the floatable unit to the anchoring element.
- Fig. 5b: shows a flow chart of a method for releasing the floatable unit from the anchoring element.

### DETAILED DESCRIPTION OF PREFERRED EMBODIMENTS OF THE INVENTION

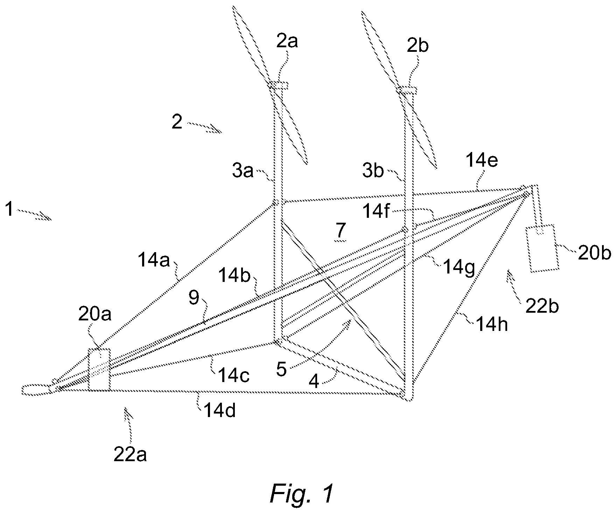

The invention will now be explained with reference to fig. 1-5. Figures 1 - 3 shows a floatable unit 1 comprising a wind power plant 2. The floatable unit 1 is adapted to be anchored at sea where the wind power plant 2 converts wind energy to electrical energy. The wind power plant 2 includes a plurality of wind turbines 2a, 2b. In this embodiment the wind power plant 2 includes two wind turbines 2a, 2b. However, in another embodiment of the invention, the wind power plant 2 may include three or more wind turbines.

The wind power plant 2 comprises a framework comprising at least two support elements 3a, 3b adapted to support the wind turbines 2a, 2b. The support elements 3a, 3b are elongated. In this embodiment, the support elements 3a, 3b are two hollow tubes arranged at a distance from each other. The wind turbines 2a, 2b are mechanically connected to upper ends of the support elements. The wind power plant 2 is designed so that the support elements 3a, 3b are vertically arranged when the plant 2 is in operation.

The floatable unit 1 further includes an elongated unit 4 arranged between the support elements 3a-b. The elongated unit 4 is also tube shaped. The elongated unit 4 is mechanically connected to lower ends of the support elements. In another embodiment it is possible to have three or more support elements to support three or more wind turbines. For example, the support elements 3a-b and the elongated units 4 are made by tubes. The tubes contribute to a certain floating power and stabilizing in roll direction.

The framework further includes a diagonal brace 5 connected to the support elements 3a-b in order to guy the support elements. It is advantageous to use a diagonal brace to stabilize the support elements and to reduce the stresses in the framework. Of course, it is possible to use other type of arrangement to guy the support elements.

The floatable unit 1 comprises an elongated beam 9, in the following named support beam. The elongated beam 9 is arranged so that it extends from a first part 22a of the floatable unit 1, between the support elements 3a-b, and to a second part 22b of the floatable unit 1. The support elements 3a-b and the elongated unit 4 form a plane. The beam 9 is arranged angular with respect to the plane. The support beam 9 is neither perpendicular to the plane nor parallel with the plane. Preferably, the beam is arranged with an angle α relative the plane which is within the interval of 30° - 80°, preferably 50°-70°

The framework further comprises a plurality of wire cables 14ah, preferably made of stainless steel arranged between the support beam 9 and the framework in order to mechanically connect the beam to the framework. The beam 9 and the support elements are provided with a plurality of cable attachments for facilitating the attachment of the wire cables. The cable attachment is, for example, a loop or a ring. The ends of the cable wire are also provided with corresponding attachments, for example hooks. The arrangement with wire cables achieves an optimal utilization of material and accordingly reduces the weight of the wind power plant 2.

In the embodiment shown in figure 1 - 3, eight wire cables are arranged between the beam and the framework. Four of the wire cables 14a-d are arranged between the framework and the end of the beam 9, and four of the wire cables 14e-h are arranged between the framework and the opposite end of the beam 9. In this embodiment, cable wires 14a and 14c are connected between a first end of the beam 9 and the support element 3a, cable wires 14b and 14d are connected between the first end of the beam 9 and the support element 3b. Cable wires 14e and 14g are connected between a second end of the beam 9 and the support element 3a, cable wires 14f and 14h are connected between the second end of the beam 9 and the support element 3b. As seen from figures 1, the support beam 9 is free from the framework, i.e. is not in contact with the framework, and is only connected to the framework through the wire cables 14a-h. Since the support beam 9 has no connection to the framework except through the wire cables 14a-h no movement is introduced in the ends of the cable wires, which reduces the stress in the beam and the framework.

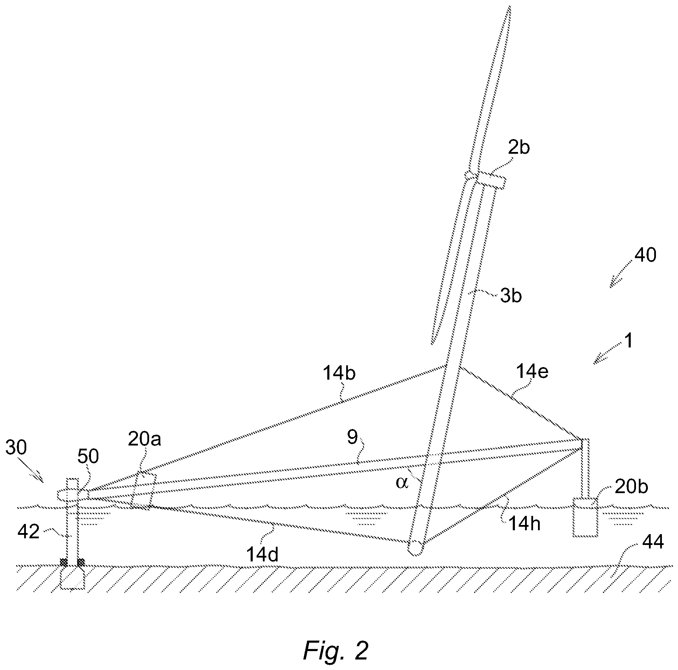

Figure 2 shows the floatable unit 1 connected to an anchoring element 30. The floatable unit 1 and the anchoring element 30 further constitute an anchoring arrangement 40.

The floatable unit 1 is in a transportation position, in which it is possible, after disconnecting the floatable unit 1 from the anchoring element 30, to tow the floatable unit 1 away from its anchoring position. The floatable unit 1 comprises a first pontoon member 20a at a first part 22a of the floatable unit 1 and a second pontoon member 20b at a second part 22b of the floatable unit 1. By means of the first pontoon member 22a and the second pontoon member 22b the floatable unit 1 floats at the surface of the water when the floatable unit is transported to and from the anchoring position.

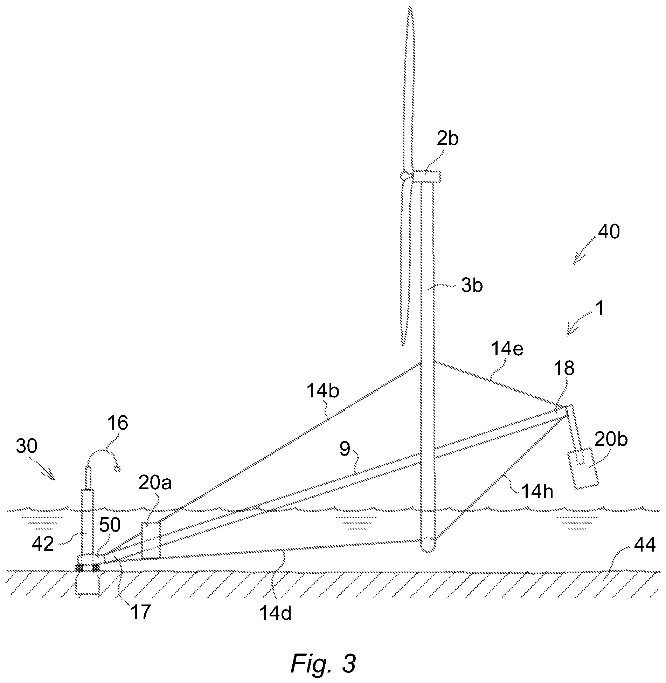

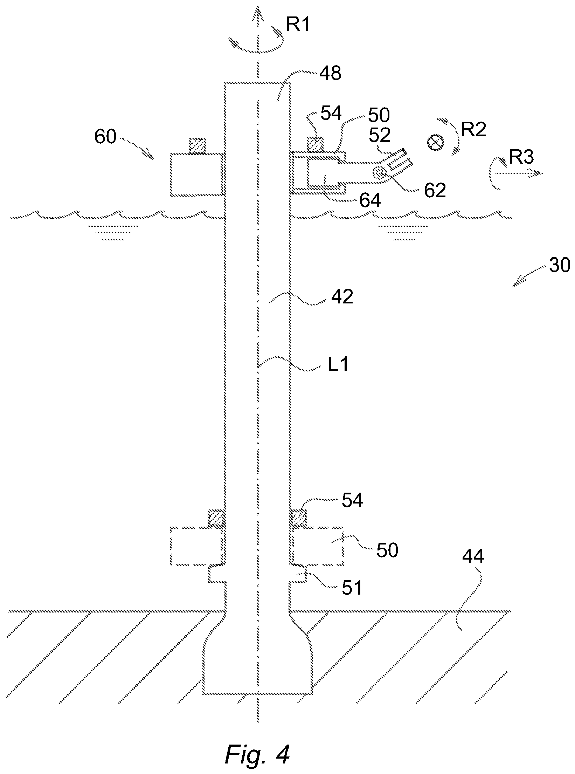

In fig. 3 the floatable unit 1 is anchored to the anchoring element 30. In fig. 2 and 3 the floatable member is connected to a displacement member 50 of the anchoring element 30, wherein the displacement member 50 in fig. 2 is in a first position and in fig. 3 in a second position. Fig. 2 and 3 will be discussed further in detail in connection to fig. 4 and the method of anchoring the floatable unit 1.

Figure 4 shows a side view of a cross section of the anchoring element 30 according to an embodiment of the invention. The anchoring element 30 comprises an elongated fundament 42 adapted to be firmly attached in the bottom sediment 44 so that a longitudinal axis L1 of the fundament 42 is oriented extending essentially perpendicular from the bottom sediment 44 to the surface of the water.

The fundament 42 comprises an outer envelope surface that is arranged cylindrical. The fundament 42 is for example a homogeneous rod or a pipe. The fundament 42 is made of a material with high strength, in particular to shear stress. The material of the fundament 42 is for example reinforced concrete, steel, stainless steel. The fundament 42 is for example a hollow tube.

A first end 46 of the fundament 42 is adapted to be arranged within the bottom sediment 44 and together with the bottom sediment 44 form an attachment that firmly holds the fundament 42 in place. The first end 46 of the fundament 42 is arranged with a part that is thicker in comparison the remaining part of the fundament 42. A second end 48 of the fundament 42 is adapted to be in vicinity of the surface of the water. In fig. 4, the second end 48 of the fundament 42 is located above the surface of the water.

The anchoring element 30 comprises a displacement member 50 that is displaceable along the first longitudinal axis L1 between a first position and a second position. The first position of the displacement member 50 is located further away from the bottom sediment 44 than the second position. In fig. 4 the first position is indicated by depicting the displacement member 50 with full lines and the second position with dotted lines. The second position of the displacement member 50 is defined by a stop member 51.

The displacement member 50 comprises a ring formed body that comprises an inner envelope surface. The body of the displacement member 50 is arranged so that the displacement member 50 is guided between the first and the second position by means of that the outer envelope surface of the fundament 42 and the inner envelope surface of the displacement member 50 contact each other.

The anchoring element 30 further comprises a connection member 52 adapted to form a rigid connection between the displacement member 50 and the first part 22a of the floatable unit 1. For example, the connection member 52 enables the beam 9 of the floatable unit 1 to be connected to the displacement member 50.

The connection member 52 provides a releasable connection between the first part 22a of the floatable unit 1 and the displacement member 50. According to an embodiment of the invention the connection member 52 comprises a locking pin adapted engage with a respective opening in the connection member 52 and the first part 22a of the floatable unit 1, and thereby enabling the releasable connection.

The anchoring element 30 further comprises a locking member 54 adapted form a fastening of the displacement member 50 to the second position. The locking member 54 comprises an engaging state where the locking member 54 assures that the displacement member 50 is maintained in the second position and a disengaging state where the locking member 54 allows the displacement member 50 to be displaced between the first and the second position.

In fig. 4, the locking member 54 is illustrated in the engaging state when the displacement member 50 is in the second position and in the disengaging state when the displacement member 50 is in the first position.

By means of the locking member 54 it is assured that the displacement member 50 is maintained in the second position during anchoring the floatable unit 1. The locking member 54 provides a releasable fastening of the displacement member 50 to the second position. Accordingly, the locking member 54 allows the displacement member 50 to be fastened to the second position and unfastened from the second position.

The locking member 54 is for example a locking ring that in the engaging state engages with the envelope surface of the fundament 42 and thereby prevents the displacement member 50 from being displaced away from the second position and in the disengaging state lacks contact with the envelope surface and thereby allows the displacement member 50 to be displaced between the first and the second position.

The anchoring element 30 comprises a first pivot 60 that allows the displacement member 50 to be pivoted around the outer envelope surface of the fundament 42 with a first axis of rotation R1. The first axis of rotation R1 is thus parallel with the longitudinal axis L1 of the fundament 42.

By means of the ring-formed body of the displacement member 50 the outer envelope surface of the fundament 42 abuts the inner envelope surface of the displacement member 50 in such a way that allows the displacement member 50 to be pivoted with the first axis of rotation R1. The first pivot 60 assures that the floatable unit 1 is arranged pivotable around the anchoring element 30 without the risk of entanglement with any wires between the anchoring element 30 and the floatable unit 1.

The anchoring element 30 further comprises a second pivot 62 that allows the connection member 52 to be pivoted in relation to the displacement member 50 with a second rotation axis R2 that is arranged perpendicular to the longitudinal axis L1. The second pivot 62 assures that the floatable unit 1 is arranged pivotable around the displacement member 50 and thereby allows the floatable unit 1 freedom to move as the floatable unit 1 is affected by waves and wind.

The anchoring element 30 further comprises a third pivot 64 that allows the connection member 52 to be pivoted in relation to the displacement member 50 with a third rotation axis R3 that is arranged perpendicular to the first rotation R1 and the second rotation R2.

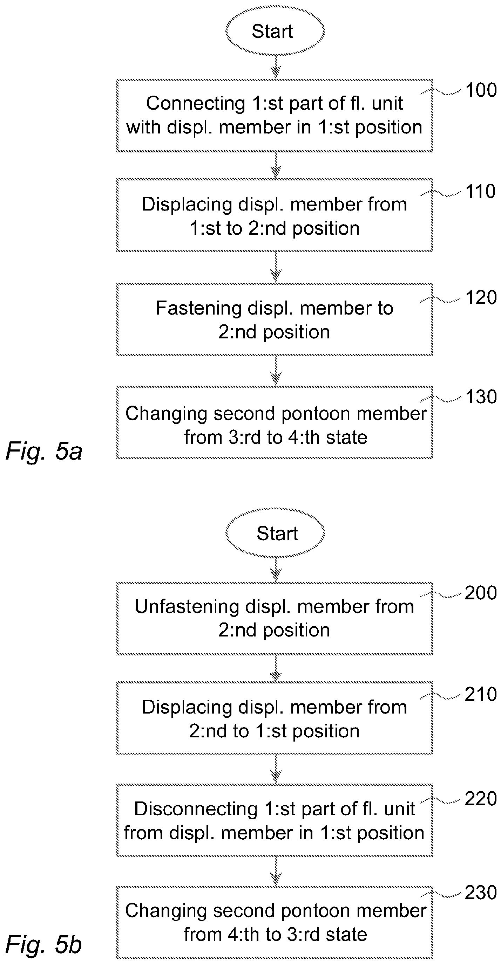

The invention also relates also to a method for anchoring the floatable unit 1 to the anchoring element 30 and releasing the floatable unit 1 from an anchoring element 30. The steps of the method will be described with reference to fig. 5a disclosing a flow chart for anchoring the floatable unit 1 to the anchoring element 30 and fig. 5b disclosing a flow chart for releasing the floatable unit 1 from the anchoring element 30.

The method for anchoring the floatable unit 1 to the anchoring element 30 comprises, in a step 100, connecting the first part 22a of the floatable unit 1 to the displacement member 50. The connection is established by means of the connection member 52 when the displacement member 50 is in the first position and the floatable unit 1 is floating at the surface on the frame work of the floatable unit 1, the first pontoon member 20a and the second pontoon member 20b. Thereby, the first part 22a of the floatable unit 1 is firmly attached to the displacement member 50. The situation of step 100 is illustrated by fig. 2.

In a step 110, the method comprises displacing the displacement member 50 from the first position to the second position. The displacement member 50 is displaced along the longitudinal axis L1 of the fundament 42 to the stop member 51 that defines the second position.

In an embodiment of the invention, the displacement member 50 is displaced from the first position to the second position by means of changing the buoyancy of the first pontoon member 20a from the a first state to a second state while second part 22b of the floatable unit 1 is floating on the frame work of the floatable unit 1. The buoyancy of the first pontoon member 20a is changed by introducing water into the first pontoon member 20a. Thereby, the first part 22a of the floatable unit 1 sinks together with the displacement member 50 to the second position of the displacement member 50 while the second part 22b of the floatable unit 1 is maintained floating at the surface.

According to the embodiment shown in fig. 3, the second pontoon member 20b is positioned above the surface of the water when the first part 22a of the floatable unit 1 is in the second position of the displacement member 50. By means of changing the second pontoon member 20b from the third state to the fourth state the stability of the floatable unit 1 is improved. In the fourth state the second pontoon member 20b has a higher mass than in the third state. Thereby, the natural frequency of the floating unit 1 is reduced.

In a step 120, the method comprises fastening the displacement member 50 to the second position. The fastening is established by means of the locking member 54 that is changed from the disengaging state to the engaging state. Thereby, the displacement member 50 is locked to the second position while the first part 22a is held to the displacement member 50 at the second position. The situation of step 120 is illustrated by fig. 3 and represents the anchored state of the floatable unit 1.

Due to the fact that the anchoring point is close to the bottom sediment 44, bending stresses on the anchoring element 30 is significantly reduced, and therefore the post only has to be dimensioned mainly for sheer forces with small bending movement.

The framework and the beam 9 are designed so that the support elements 3a-b are essentially vertical and the plane of the turbines are parallel with the vertical plane when the plant is anchored.

In a step 130, the method comprises changing the second pontoon member 20b from the third state to the fourth state when anchoring the floatable unit 1 to the anchoring element 30. The change from the third state to the fourth state is realized by introducing water into a space of the second pontoon member 20b. The change results in that the mass of the second pontoon member 20b is increased so that the natural frequency of the floatable unit 1 is reduced.

The method for releasing the floatable unit 1 from the anchoring element 30 comprises, in a step 200, unfastening the displacement member 50 from the second position. The unfastening of the displacement member 50 is realized by means of changing the locking member 54 form the engaging state to the disengaging state. Thereby, the displacement member 50 is free to be displaced between the first and second position along the longitudinal axis L1 of the fundament 42. The situation is illustrated by fig. 3.

In a step 210, the method comprises displacing the displacement member 50 from the second position to the first position. The displacement member 50 is displaced along the longitudinal axis L1 of the fundament 42 to the first position located at or in vicinity of the surface of the water.

In an embodiment of the invention, the displacement member 50 is displaced from the second position to the first position by means of changing the buoyancy of the first pontoon member 20a from the second state to the first state while the buoyancy of the second pontoon member 20b is maintain. Preferably, the buoyancy of the first pontoon member 20a is changed by removing water from the first pontoon member 20a. Thereby, the first part 22a of the floatable unit 1 is lifted towards the surface together with the displacement member 50 to the first position of the displacement member 50 while the second part 22b of the floatable unit 1 is maintained floating at the surface.

In a step 220, the method comprises disconnecting the floatable unit 1 from the displacement member 50 when the displacement member 50 is in the first position. The connection between the first part 22a of the floatable unit 1 and the displacement member 50 is released by means of the connection member 52. Thereby, the floatable unit 1 is in a transportation position, in which it is possible to tow the floatable unit 1 away from its anchoring position, such as for maintenance. The situation of step 220 is illustrated by fig. 2.

In a step 230, the method comprises changing the second pontoon member 20b from the fourth state to the third state when releasing the floatable unit 1 from the anchoring element 30. The change from the fourth state to the third state is realized by removing water from the space of the second pontoon member 20b. The change results in that the mass of the second pontoon member 20b is reduced and the second pontoon member 20b again provides buoyancy.

A power cable 16 is positioned on the bottom sediment 44 and extends through the anchoring element 30. The power cable 16 is connected to the wind power plant above the surface of the water after the connection to the post. An advantage with this is that the power cable 16 does not move in the water due to movements of the framework.

In an embodiment of the invention, the floatable unit 1 is large, for example, the length of the beam 9 is about 150m. The part of the beam 9 extending in a direction towards the anchoring element 30 is, for example, about 100m and the part of the beam extending in the opposite direction is, for example, about 50m.

An advantage with the floatable unit 1 comprising the wind power plant 2 according to the present invention is that it is possible to anchor the floatable unit 1 in shallow water. Another advantage compared to the prior art power plants is that the wind turbines only has one support element to the centre of a rotor of the wind turbine. This arrangement reduces disturbances and problems with dynamic dimensioning of the framework.

The present invention is not limited to the embodiments disclosed but may be varied and modified within the scope of the following claims.

## Claims

1. Anchoring arrangement (40) for anchoring a floatable wind power unit (1) in water, wherein the anchoring arrangement (40) comprises:
- the floatable wind power unit (1) having a first part (22a) and a second part (22b) between which support elements (3a, 3b) adapted to support at least two wind turbines (2a, 2b) are arranged, and
- an anchoring element (30) comprising an elongated fundament (42) configured to be firmly attached in a bottom sediment (44) so that a longitudinal axis (L1) of the fundament (42) is oriented from the bottom sediment (44) towards the surface of the water,
wherein the anchoring element (30) further comprises a displacement member (50) rotary arranged on the fundament (42) and a connection member (52) adapted to form a connection between the displacement member (50) and the first part (22a) of the floatable wind power unit (1),
wherein the displacement member (50) is arranged displaceable along said longitudinal axis (L1) between a first position and a second position, which first position is located further away from the bottom sediment (44) than the second position,
wherein the connection member (52) is adapted to form a rigid connection between the displacement member (50) and the first part (22a) of the floatable wind power unit (1) when the displacement member (50) is in the first position, and the displacement member (50) is adapted, while being connected to the first part (22a) of the floatable wind power unit (1), to be brought from the first position to the second position,
***characterized in* that**
the displacement member (50) is adapted to be displaced from the first position, configured to be located at or in vicinity of the surface of the water, to the second position, configured to be located at or in vicinity of the bottom sediment, by means of reducing the buoyancy of the first part (22a) of the floatable wind power unit (1) while the second part (22b) of the floatable wind power unit (1) is maintained floating.

2. Anchoring arrangement (40) according to claim 1, wherein the anchoring element (30) further comprises a locking member (54) adapted to form a fastening of the displacement member (50) to the second position while the first part (22a) of the floatable wind power unit (1) is connected to the displacement member (50).

3. Anchoring arrangement (40) according to claim 1 or 2, wherein the connection member (52) provides a releasable connection between the displacement member (50) and the first part (22a) of the floatable wind power unit (1) when the displacement member (50) is in the first position.

4. Anchoring arrangement (40) according to any of claims 1-3, wherein the fundament (42) comprises an outer envelope surface and the displacement member (50) comprises a body arranged around the outer envelope surface, which body comprises an inner envelope surface directed towards the outer envelope surface, wherein the outer envelope surface is adapted to guide the displacement of the displacement member (50) between the first and the second position by contacting the inner envelope surface.

5. Anchoring arrangement (40) according to any of the preceding claims, wherein the anchoring element (30) comprises a first pivot (60) that rotary arranges the displacement member (50) in relation to the fundament (42) and which first pivot (60) comprises a first rotation axis (R1) that is arranged parallel with the longitudinal axis (L1) of the fundament (42).

6. Anchoring arrangement (40) according to claim 5, wherein at least one of the displacement member (50) and the connection member (52) comprises a second pivot (62) that enables the floatable wind power unit (1) to be pivoted in relation to the displacement member (50) and which second pivot (62) comprises a second rotation axis (R2) that is arranged perpendicular to the longitudinal axis (L1) of the fundament (42).

7. Anchoring arrangement (40) according to claim 6, wherein at least one of the displacement member (50) and the connection member (52) comprises a third pivot (64) that enables the floatable wind power unit (1) to be pivoted in relation to the displacement member (50) and which third pivot (64) comprises a third rotation axis (R3) that is arranged perpendicular to the first rotation axis (R1) and the second rotation axis (R2).

8. Anchoring arrangement (40) according to any of the preceding claims, wherein the fundament (42) has a length that allows the fundament (42) to, when attached in the bottom sediment (44), extend from the bottom sediment (44) to at least the surface of the water.

9. Anchoring arrangement (40) according to any of the preceding claims, wherein the floatable wind power unit (1) comprises a first pontoon member (20a) at the first part (22a) of the floatable wind power unit (1), which first pontoon member (20a) comprises a first state in which the pontoon member provides a first buoyancy that enables the first part (22a) of the floatable wind power unit (1) to float and a second state in which the pontoon member provides a second buoyancy that sinks the first part (22a) of the floatable wind power unit (1) towards the bottom sediment (44),
wherein the displacement member (50) is adapted to be displace, while the second part (22b) of the floatable wind power unit (1) is floating, from the first position to the second position by means of changing the first pontoon member (20a) from the first state to the second state and from the second position to the first position by means of changing the first pontoon member (20a) from the second state to the first state.

10. Anchoring arrangement (40) according to claim 9, wherein the first pontoon member (20a) comprises wall sections that form a space, wherein the first pontoon member (20a) is adapted to be changed between the first state and the second state by means of introducing and removing water to/from said space.

11. Anchoring arrangement (40) according to claim 9-10, wherein the first buoyancy enables the first part (22a) of the floatable wind power unit (1) to float so to enable a connection to the displacement member (50) when the displacement member (50) is in the first position and the second buoyancy enables the first part (22a) of the floatable wind power unit (1) to sink together with the displacement member (50) to the second position of the displacement member (50).

12. Anchoring arrangement (40) according to claim 9-11, wherein the floatable wind power unit (1) comprises a frame work providing a buoyancy and a second pontoon member (20b) at the second part of the floatable wind power unit (22b), wherein the second pontoon member (20b) comprises a third state in which the second pontoon member (20b) has a first mass and a fourth state in which the second pontoon member (20b) has a second mass, which second mass is larger than the first mass, wherein the second pontoon member (20b) is adjustable between the third state and the fourth state.

13. Anchoring arrangement (40) according to claim 9-12, wherein the fundament (42) comprises a hollow space extending along the longitudinal axis (L1) and the anchoring arrangement (40) comprises a power cable (16) extending from the bottom sediment (44) through said hollow space and to above the surface of the water.

14. Method for anchoring a floatable wind power unit (1) in water by means of an anchoring element (30) comprising an elongated fundament (42) firmly attached in a bottom sediment (44) so that a longitudinal axis (L1) of the fundament (42) is oriented from the bottom sediment (44) towards the surface of the water and a displacement member (50) displaceable along said longitudinal axis (L1) between a first position and a second position, which first position is located further away from the bottom sediment (44) than the second position, said floatable wind power unit (1) having a first part (22a) and a second part (22b) between which support elements (3a, 3b) adapted to support at least two wind turbines (2a, 2b) are arranged,
wherein the method comprises the steps:
- connecting the first part (22a) of the floatable wind power unit (1) to the displacement member (50),
- displacing the displacement member (50) with the first part (22a) of the floatable wind power unit (1) from the first position, located at or in vicinity of the surface of the water, to the second position, located at or in vicinity of the bottom sediment, by means of reducing the buoyancy of the first part (22a) of the floatable wind power unit (1) while the second part (22b) of the floatable wind power unit (1) is maintained floating.

15. Use of an anchoring arrangement (40) according to any of claim 1-13 for anchoring a floatable wind power unit (1) in water.

## Patentansprüche

1. Verankerungsanordnung (40) zum Verankern einer schwimmfähigen Windkrafteinheit (1) in Wasser, wobei die Verankerungsanordnung (40) umfasst:
- die schwimmfähige Windkrafteinheit (1) mit einem ersten Teil (22a) und einem zweiten Teil (22b) zwischen denen Stützelemente (3a, 3b) angeordnet sind, die angepasst sind, mindestens zwei Windturbinen (2a, 2b) zu stützen, und
- ein Verankerungselement (30), das ein längliches Fundament (42) umfasst, das konfiguriert ist, fest in einem Bodensediment (44) befestigt zu sein, sodass eine Längsachse (L1) des Fundaments (42) vom Bodensediment (44) hin zur Wasseroberfläche ausgerichtet ist,
wobei das Verankerungselement (30) weiter ein Versatzbauteil (50) umfasst, das drehbar an dem Fundament (42) angeordnet ist, und ein Verbindungsbauteil (52), das angepasst ist, eine Verbindung zwischen dem Versatzbauteil (50) und dem ersten Teil (22a) der schwimmfähigen Windkrafteinheit (1) zu bilden,
wobei das Versatzbauteil (50) versetzbar entlang der Längsachse (L1) zwischen einer ersten Position und einer zweiten Position angeordnet ist, welche erste Position weiter weg vom Bodensediment (44) liegt als die zweite Position,
wobei das Verbindungsbauteil (52) angepasst ist, eine starre Verbindung zwischen dem Versatzbauteil (50) und dem ersten Teil (22a) der schwimmfähigen Windkrafteinheit (1) zu bilden, wenn das Versatzbauteil (50) in der ersten Position ist, und das Versatzbauteil (50) angepasst ist, während es mit dem ersten Teil (22a) der schwimmfähigen Windkrafteinheit (1) verbunden ist, von der ersten Position zur zweiten Position gebracht zu werden,
**dadurch gekennzeichnet, dass**
das Versatzbauteil (50) angepasst ist, von der ersten Position, die konfiguriert ist, bei oder in der Nähe der Wasseroberfläche zu liegen, zur zweiten Position, die konfiguriert ist, bei dem oder in der Nähe des Bodensediment(s) zu liegen, durch Verringern des Auftriebs des ersten Teils (22a) der schwimmfähigen Windkrafteinheit (1) versetzt zu werden, während der zweite Teil (22b) der schwimmfähigen Windkrafteinheit (1) schwimmfähig beibehalten wird.

2. Verankerungsanordnung (40) nach Anspruch 1, wobei das Verankerungselement (30) weiter ein Verriegelungsbauteil (54) umfasst, das angepasst ist, eine Befestigung des Versatzbauteils (50) an der zweiten Position zu bilden, während der erste Teil (22a) der schwimmfähigen Windkrafteinheit (1) mit dem Versatzbauteil (50) verbunden ist.

3. Verankerungsanordnung (40) nach Anspruch 1 oder 2, wobei der Verbindungsbauteil (52) eine lösbare Verbindung zwischen dem Versatzbauteil (50) und dem ersten Teil (22a) der schwimmfähigen Windkrafteinheit (1) bereitstellt, wenn das Versatzbauteil (50) in der ersten Position ist.

4. Verankerungsanordnung (40) nach einem der Ansprüche 1-3, wobei das Fundament (42) eine Außenhüllenfläche umfasst und das Versatzbauteil (50) einen Körper umfasst, der um die Außenhüllenfläche angeordnet ist, welcher Körper eine Innenhüllenfläche umfasst, die hin zu der Außenhüllenfläche gerichtet ist, wobei die Außenhüllenfläche angepasst ist, den Versatz des Versatzbauteils (50) zwischen der ersten und der zweiten Position durch Kontaktieren der Innenhüllenfläche zu leiten.

5. Verankerungsanordnung (40) nach einem der vorstehenden Ansprüche, wobei das Verankerungselement (30) ein erstes Gelenk (60) umfasst, das das Versatzbauteil (50) in Bezug auf das Fundament (42) drehbar anordnet und welches erste Gelenk (60) eine erste Drehachse (R1) umfasst, die parallel mit der Längsachse (L1) des Fundaments (42) angeordnet ist.

6. Verankerungsanordnung (40) nach Anspruch 5, wobei mindestens eines des Versatzbauteils (50) und des Verbindungsbauteils (52) ein zweites Gelenk (62) umfasst, das der schwimmfähigen Windkrafteinheit (1) ermöglicht, in Bezug auf das Versatzbauteil (50) geschwenkt zu werden, und welches zweite Gelenk (62) eine zweite Drehachse (R2) umfasst, die senkrecht zur Längsachse (L1) des Fundaments (42) angeordnet ist.

7. Verankerungsanordnung (40) nach Anspruch 6, wobei mindestens eines des Versatzbauteils (50) und des Verbindungsbauteils (52) ein drittes Gelenk (64) umfasst, das der schwimmfähigen Windkrafteinheit (1) ermöglicht, in Bezug auf das Versatzbauteil (50) geschwenkt zu werden, und welches dritte Gelenk (64) eine dritte Drehachse (R3) umfasst, die senkrecht zu der ersten Drehachse (R1) und der zweiten Drehachse (R2) angeordnet ist.

8. Verankerungsanordnung (40) nach einem der vorstehenden Ansprüche, wobei das Fundament (42) eine Länge hat, die dem Fundament (42) erlaubt, wenn im Bodensediment (44) befestigt, sich vom Bodensediment (44) zu mindestens der Wasseroberfläche zu erstrecken.

9. Verankerungsanordnung (40) nach einem der vorstehenden Ansprüche, wobei die schwimmfähige Windkrafteinheit (1) ein erstes Pontonbauteil (20a) beim ersten Teil (22a) der schwimmfähigen Windkrafteinheit (1) umfasst, welches erste Pontonbauteil (20a) einen ersten Zustand umfasst, in dem das Pontonbauteil einen ersten Auftrieb bereitstellt, der dem ersten Teil (22a) der schwimmfähigen Windkrafteinheit (1) ermöglicht zu schwimmen, und einen zweiten Zustand, in dem das Pontonbauteil einen zweiten Auftrieb bereitstellt, der den ersten Teil (22a) der schwimmfähigen Windkrafteinheit (1) hin zum Bodensediment (44) senkt,
wobei das Versatzbauteil (50) angepasst ist, während der zweite Teil (22b) der schwimmfähigen Windkrafteinheit (1) schwimmt, durch Ändern des ersten Pontonbauteils (20a) vom ersten Zustand zum zweiten Zustand von der ersten Position zur zweiten Position versetzt zu werden, und durch Ändern des ersten Pontonbauteils (20a) vom zweiten Zustand zum ersten Zustand von der zweiten Position zur ersten Position versetzt zu werden.

10. Verankerungsanordnung (40) nach Anspruch 9, wobei das erste Pontonbauteil (20a) Wandabschnitte umfasst, die einen Raum bilden, wobei das erste Pontonbauteil (20a) angepasst ist, zwischen dem ersten Zustand und dem zweiten Zustand, durch Einleiten und Entfernen von Wasser zu/von dem Raum, geändert zu werden.

11. Verankerungsanordnung (40) nach Anspruch 9-10, wobei der erste Auftrieb dem ersten Teil (22a) der schwimmfähigen Windkrafteinheit (1) ermöglicht, zu schwimmen, um eine Verbindung mit dem Versatzbauteil (50) zu ermöglichen, wenn das Versatzbauteil (50) in der ersten Position ist, und der zweite Auftrieb dem ersten Teil (22a) der schwimmfähigen Windkrafteinheit (1) ermöglicht, gemeinsam mit dem Versatzbauteil (50) zur zweiten Position des Versatzbauteils (50) zu sinken.

12. Verankerungsanordnung (40) nach Anspruch 9-11, wobei die schwimmfähige Windkrafteinheit (1) ein Rahmengestell umfasst, das einen Auftrieb bereitstellt, und ein zweites Pontonbauteil (20b) beim zweiten Teil der schwimmfähigen Windkrafteinheit (22b), wobei das zweite Pontonbauteil (20b) einen dritten Zustand umfasst, in dem das zweite Pontonbauteil (20b) eine erste Masse hat, und einen vierten Zustand, in dem das zweite Pontonbauteil (20b) eine zweite Masse hat, welche zweite Masse größer ist als die erste Masse, wobei das zweite Pontonbauteil (20b) zwischen dem dritten Zustand und dem vierten Zustand anpassbar ist.

13. Verankerungsanordnung (40) nach Anspruch 9-12, wobei das Fundament (42) einen Hohlraum umfasst, der sich entlang der Längsachse (L1) erstreckt, und die Verankerungsanordnung (40) ein Stromkabel (16) umfasst, das sich vom Bodensediment (44) durch den Hohlraum und über die Wasseroberfläche erstreckt.

14. Verfahren zum Verankern einer schwimmfähigen Windkrafteinheit (1) in Wasser durch ein Verankerungselement (30), das ein längliches Fundament (42) umfasst, das fest in einem Bodensediment (44) befestigt ist, sodass eine Längsachse (L1) des Fundaments (42) vom Bodensediment (44) hin zur Wasseroberfläche ausgerichtet ist, und ein Versatzbauteil (50), das entlang der Längsachse (L1) zwischen einer ersten Position und einer zweiten Position versetzbar ist, welche erste Position weiter weg vom Bodensediment (44) liegt als die zweite Position, wobei die schwimmfähige Windkrafteinheit (1) einen ersten Teil (22a) und einen zweiten Teil (22b) hat, zwischen denen Stützelemente (3a, 3b) angeordnet sind, die angepasst sind, mindestens zwei Windturbinen (2a, 2b) zu stützen,
wobei das Verfahren die Schritte umfasst:
- Verbinden des ersten Teils (22a) der schwimmfähigen Windkrafteinheit (1) mit dem Versatzbauteil (50),
- Versetzen des Versatzbauteils (50) mit dem ersten Teil (22a) der schwimmfähigen Windkrafteinheit (1) von der ersten Position, die bei oder in der Nähe der Wasseroberfläche liegt, zur zweiten Position, die bei dem oder in der Nähe des Bodensediment(s) liegt, durch Verringern des Auftriebs des ersten Teils (22a) der schwimmfähigen Windkrafteinheit (1), während der zweite Teil (22b) der schwimmfähigen Windkrafteinheit (1) schwimmfähig beibehalten wird.

15. Verwendung einer Verankerungsanordnung (40) nach einem der Ansprüche 1-13 zum Verankern einer schwimmfähigen Windkrafteinheit (1) in Wasser.

## Revendications

1. Dispositif d'ancrage (40) pour ancrer une unité d'énergie éolienne flottante (1) dans l'eau, dans lequel le dispositif d'ancrage (40) comprend :
- l'unité d'énergie éolienne flottante (1) ayant une première partie (22a) et une seconde partie (22b) entre lesquelles sont agencés des éléments de support (3a, 3b) adaptés pour supporter au moins deux éoliennes (2a, 2b), et
- un élément d'ancrage (30) comprenant une fondation allongée (42) configurée pour être fixée fermement dans un sédiment de fond (44) de sorte qu'un axe longitudinal (L1) de la fondation (42) soit orienté du sédiment de fond (44) vers la surface de l'eau,
dans lequel l'élément d'ancrage (30) comprend en outre un élément de déplacement (50) agencé de manière rotative sur la fondation (42) et un élément de connexion (52) adapté pour former une connexion entre l'élément de déplacement (50) et la première partie (22a) de l'éolienne flottante (1),
dans lequel l'élément de déplacement (50) est agencé de manière déplaçable le long dudit axe longitudinal (L1) entre une première position et une seconde position, laquelle première position est située plus loin du sédiment de fond (44) que la seconde position,
dans lequel l'élément de connexion (52) est adapté pour former une connexion rigide entre l'élément de déplacement (50) et la première partie (22a) de l'unité d'énergie éolienne flottante (1) lorsque l'élément de déplacement (50) est dans la première position, et l'élément de déplacement (50) est adapté, tout en étant connecté à la première partie (22a) de l'unité d'énergie éolienne flottante (1), pour être amené de la première position à la seconde position,
***caractérisé en ce que***
l'élément de déplacement (50) est adapté pour être déplacé de la première position, configurée pour être située au niveau ou à proximité de la surface de l'eau, vers la seconde position, configurée pour être située au niveau ou à proximité du sédiment de fond, par l'intermédiaire d'une réduction de la flottabilité de la première partie (22a) de l'unité d'énergie éolienne flottante (1) tandis que la seconde partie (22b) de l'unité d'énergie éolienne flottante (1) est maintenue flottante.

2. Dispositif d'ancrage (40) selon la revendication 1, dans lequel l'élément d'ancrage (30) comprend en outre un élément de verrouillage (54) adapté pour former une fixation de l'élément de déplacement (50) à la seconde position tandis que la première partie (22a) de l'unité d'énergie éolienne flottante (1) est reliée à l'élément de déplacement (50).

3. Dispositif d'ancrage (40) selon la revendication 1 ou 2, dans lequel l'élément de connexion (52) fournit une connexion libérable entre l'élément de déplacement (50) et la première partie (22a) de l'unité d'énergie éolienne flottante (1) lorsque l'élément de déplacement (50) est dans la première position.

4. Dispositif d'ancrage (40) selon l'une quelconque des revendications 1 à 3, dans lequel la fondation (42) comprend une surface d'enveloppe externe et l'élément de déplacement (50) comprend un corps agencé autour de la surface d'enveloppe externe, lequel corps comprend une surface d'enveloppe interne dirigée vers la surface extérieure de l'enveloppe, dans lequel la surface extérieure de l'enveloppe est adaptée pour guider le déplacement de l'élément de déplacement (50) entre le première et seconde positions par contact avec la surface d'enveloppe interne.

5. Dispositif d'ancrage (40) selon l'une quelconque des revendications précédentes, dans lequel l'élément d'ancrage (30) comprend un premier pivot (60) qui agence l'élément de déplacement (50) de manière rotative par rapport à la fondation (42) et lequel premier pivot (60) comprend un premier axe de rotation (R1) qui est agencé parallèle à l'axe longitudinal (L1) de la fondation (42).

6. Dispositif d'ancrage (40) selon la revendication 5, dans lequel au moins un parmi l'élément de déplacement (50) et l'élément de connexion (52) comprend un deuxième pivot (62) qui permet à l'unité d'énergie éolienne flottante (1) de pivoter par rapport à l'élément de déplacement (50), et lequel deuxième pivot (62) comprend un deuxième axe de rotation (R2) qui est agencé perpendiculairement par rapport à l'axe longitudinal (L1) de la fondation (42).

7. Dispositif d'ancrage (40) selon la revendication 6, dans lequel au moins un parmi l'élément de déplacement (50) et l'élément de connexion (52) comprend un troisième pivot (64) qui permet de faire pivoter l'unité d'énergie éolienne flottante (1) par rapport à l'élément de déplacement (50), et lequel troisième pivot (64) comprend un troisième axe de rotation (R3) qui est agencé perpendiculairement par rapport au premier axe de rotation (R1) et au deuxième axe de rotation (R2).

8. Dispositif d'ancrage (40) selon l'une quelconque des revendications précédentes, dans lequel la fondation (42) a une longueur qui permet à la fondation (42), lorsqu'elle est fixée dans le sédiment de fond (44), de s'étendre du sédiment de fond (44) jusqu'au moins la surface de l'eau.

9. Dispositif d'ancrage (40) selon l'une quelconque des revendications précédentes, dans lequel l'unité d'énergie éolienne flottante (1) comprend un premier élément de ponton (20a) au niveau de la première partie (22a) de l'unité d'énergie éolienne flottante (1), lequel premier élément de ponton (20a) comprend un premier état dans lequel l'élément de ponton fournit une première flottabilité qui permet à la première partie (22a) de l'unité d'énergie éolienne flottante (1) de flotter et un second état dans lequel l'élément de ponton fournit une seconde flottabilité qui enfonce la première partie (22a) de l'unité d'énergie éolienne flottante (1) vers le sédiment de fond (44),
dans lequel l'élément de déplacement (50) est adapté pour être déplacé, tandis que la seconde partie (22b) de l'unité d'énergie éolienne flottante (1) est flottante, de la première position à la seconde position par l'intermédiaire d'un changement du premier élément de ponton (20a) du premier état au deuxième état et de la seconde position à la première position en changeant le premier élément de ponton (20a) du deuxième état au premier état.

10. Dispositif d'ancrage (40) selon la revendication 9, dans lequel le premier élément de ponton (20a) comprend des sections de paroi qui forment un espace, dans lequel le premier élément de ponton (20a) est adapté pour être changé entre le premier état et le deuxième état en introduisant et en retirant de l'eau respectivement dans ledit espace et à partir de celui-ci.

11. Dispositif d'ancrage (40) selon les revendications 9 à 10, dans lequel la première flottabilité permet à la première partie (22a) de l'unité d'énergie éolienne flottante (1) de flotter de manière à permettre une connexion à l'élément de déplacement (50) lorsque l'élément de déplacement (50) est dans la première position et la seconde flottabilité permet à la première partie (22a) de l'unité d'énergie éolienne flottante (1) de s'enfoncer avec l'élément de déplacement (50) dans la seconde position de l'élément de déplacement (50).

12. Dispositif d'ancrage (40) selon les revendications 9 à 11, dans lequel l'unité d'énergie éolienne flottante (1) comprend un bâti fournissant une flottabilité et un second élément de ponton (20b) au niveau de la seconde partie de l'unité d'énergie éolienne flottante (22b), dans lequel le second élément de ponton (20b) comprend un troisième état dans lequel le second élément de ponton (20b) a une première masse et un quatrième état dans lequel le second élément de ponton (20b) a une seconde masse, laquelle seconde masse est plus grande que la première masse, dans lequel le second élément de ponton (20b) est réglable entre le troisième état et le quatrième état.

13. Dispositif d'ancrage (40) selon les revendications 9 à 12, dans lequel la fondation (42) comprend un espace creux s'étendant le long de l'axe longitudinal (L1) et le dispositif d'ancrage (40) comprend un câble d'alimentation (16) s'étendant depuis le sédiment de fond (44) à travers ledit espace creux et au-dessus de la surface de l'eau.

14. Procédé pour ancrer une unité d'énergie éolienne flottante (1) dans l'eau au moyen d'un élément d'ancrage (30) comprenant une fondation allongée (42) fixée fermement dans un sédiment de fond (44) de sorte qu'un axe longitudinal (L1) de la fondation (42) est orienté depuis le sédiment de fond (44) vers la surface de l'eau, et un élément de déplacement (50) déplaçable le long dudit axe longitudinal (L1) entre une première position et une seconde position, laquelle première position est située plus loin du sédiment de fond (44) que la seconde position, ladite unité d'énergie éolienne flottante (1) comportant une première partie (22a) et une seconde partie (22b) entre lesquelles des éléments de support (3a, 3b) adaptés sont agencés pour supporter au moins deux éoliennes (2a, 2b),
dans lequel le procédé comprend les étapes consistant à :
- connecter la première partie (22a) de l'unité d'énergie éolienne flottante (1) à l'élément de déplacement (50),
- déplacer l'élément de déplacement (50) avec la première partie (22a) de l'unité d'énergie éolienne flottante (1) de la première position, située à la surface de l'eau ou à proximité de celle-ci, jusqu'à la seconde position, située au niveau de ou à proximité du sédiment du fond, en réduisant la flottabilité de la première partie (22a) de l'unité d'énergie éolienne flottante (1) tandis que la seconde partie (22b) de l'unité d'énergie éolienne flottante (1) est maintenue flottante.

15. Utilisation d'un dispositif d'ancrage (40) selon l'une quelconque des revendications 1 à 13 pour ancrer une unité d'énergie éolienne flottante (1) dans l'eau.
